Europäisches Patentamt

European Patent Office

Office européen des brevets

(11) Publication number: **0 142 711**
**B1**

(12) **EUROPEAN PATENT SPECIFICATION**

(45) Date of publication of patent specification: **23.12.87**

(51) Int. Cl.⁴: **A 47 J 37/06**

(21) Application number: **84112487.8**

(22) Date of filing: **17.10.84**

(54) Apparatus for grilling food.

(30) Priority: **21.10.83 IT 2331783 u**

(43) Date of publication of application:
**29.05.85 Bulletin 85/22**

(45) Publication of the grant of the patent:
**23.12.87 Bulletin 87/52**

(84) Designated Contracting States:
**AT BE CH DE FR GB LI NL SE**

(56) References cited:
**WO-A-82/03544**
**GB-A- 459 764**
**US-A-2 253 834**
**US-A-2 898 846**
**US-A-3 146 693**
**US-A-3 638 634**
**US-A-3 989 028**

(73) Proprietor: **Colli, Bruno**
**84, Via Adriatica**
**I-06087 Ponte San Giovanni (IT)**

(72) Inventor: **Colli, Bruno**
**84, Via Adriatica**
**I-06087 Ponte San Giovanni (IT)**

(74) Representative: **Marietti, Giuseppe**
**CENTRO DI CONSULENZA IN PROPRIETA'**
**INDUSTRIALE Viale Caldara, 43**
**I-20122 Milano (IT)**

Courier Press, Leamington Spa, England.

## Description

The present invention relates to an apparatus for grilling food, of the type having a heat source consisting of one or more gas burners.

As is it known, the apparatuses for grilling foodstuffs usually consist of a heat source which can be without direct flame, such as a small coal furnace, or with direct flame, such as a series of gas burners appropriately screened by means of flame trap plates, and of a grill which, if it is of the revolving type, consists of two superimposed parts between which the product to be grilled is fixed. If it is of the revolving type, the grill is provided with continuous or alternate rotary movement in such a way that all the sides of the food are in turn exposed to the heat source in order to obtain uniform cooking.

Said know apparatuses involve a considerable drawback, in that the fat contained in the food melts when heated and drops onto the heat source and the flame trap plate, so catching fire. The burning fat, besides an annoying smoke production, causes the formation of a flame which laps on the product to be cooked, unduly altering cooking conditions and creating burnt areas on the product itself.

In order to prevent the flow of grease from the food to the heat source, prior art devices provide a number of solutions, where the one described in US—A—3,638,634 is the most effective. From this patent (US—A—3,638,634) there is known a gas-fired broiler having a compacted volume of lava rock or trap rock interposed as a screen between a grill which supports the food and a primary source of heat. The container holding the trap rock has a plurality of openings towards the grill so as to absorb the fat and the other substances which drop from the food.

The drawbacks of this apparatus consist in that the screen has the same area of the grill, so that to let the heat pass through it, the container has to have some openings both towards the grill and towards the heat source, thus leaving a possible way for the grease flow; moreover the container cannot be cleaned to be used again, but the whole screen has to be changed.

An object of the present invention is now to provide an apparatus for grilling foodstuff, which allows to eliminate the aforementioned drawback of the apparatuses known up to now, avoiding that the melted fat drops on the hot surfaces near the product to be cooked and assuring that a direct contact between the product to be cooked and the flame is always avoided, so as to satisfy the severe requirements of good grilling, and being at the same time simple to make and easy to clean.

Said object is achieved by an apparatus for extemporary grilling of food, of the type comprising a grill supporting or holding the food and a heat source consisting of one or more flames and screens, placed between the same and the grill for indirect flame cooking, said screens being formed by container elements open towards the grill and filled with incoherent material capable of absorbing the fat or other substances which drop from the food and of maintaining the same at a temperature lower than the one of inflammability, characterized in that said flames are obtained from gas burners arranged in rows and said screen elements consist of channels having U-shaped sections turned upwards, each extending for the whole length of the relevant row of burners and having a width equal or higher than the one of said row.

Furthermore, said incoherent material can contain aromatizing vegetable substances (for example juniper) which, at that temperature, exhale aromatic smokes and provide the food under cooking with special organoletic characteristics.

According to an advantageous feature of the invention, under the burners, the grill has a dripping-pan, at such a distance that the melted fat dropping from the food does not catch fire or, if it does, it does not create such a flame as to reach the product under cooking.

The apparatus can be very easily cleaned in that cleaning is limited to the dripping-pan alone and to the periodical substitution of the incoherent material which fills the container elements.

According to another advantageous feature, the grill is of the revolving type, consisting of two equal and superimposed parts and presents, instead of the usual rods or metal hurdle, channel-shaped elements designed to receive at least part of the melted fat and to keep it inside during the grill rotation, leaving it to let drop again onto the product at the end of each semi-rotation of the grill. In particular, said channel-shaped elements are open towards the product and all together form the grates between which the product itself is fixed, said fixing being preferably obtained by means of teeth located on the edges of the channel-shaped elements.

Moreover, the revolving grill is kept at an optimal distance, of 15 cm approximately, from the container elements of incoherent material and is lifted to be periodically rotated.

The invention will be now described more in detail with reference to the attached drawing where:

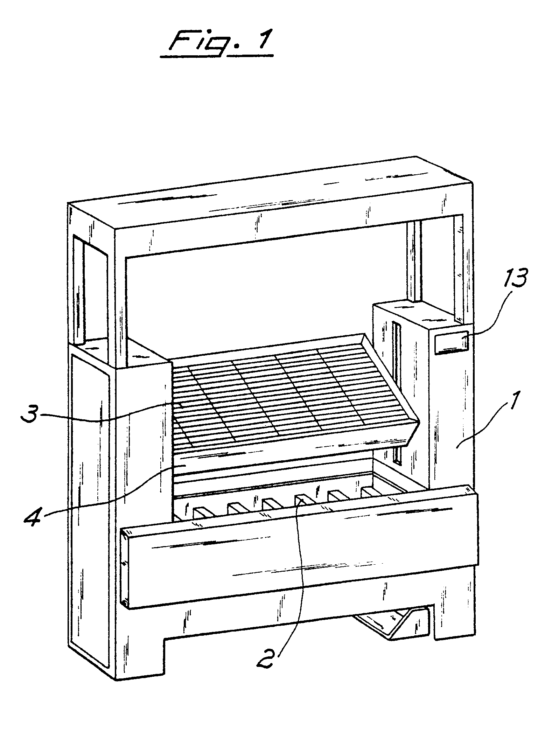

— Fig. 1 is a perspective view of the grilling apparatus

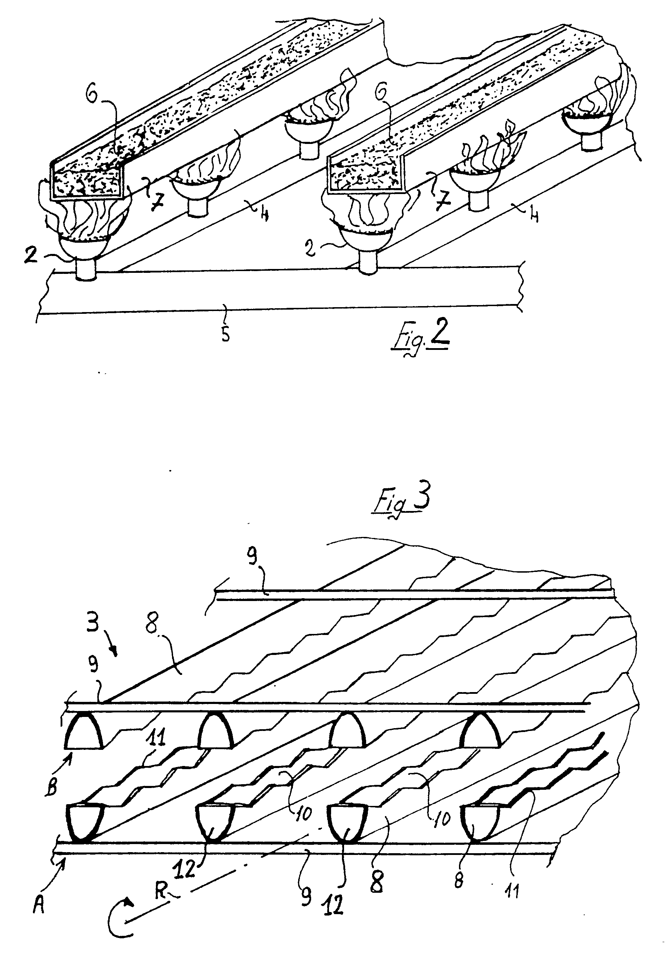

— Fig. 2 is a perspective partial view of the gas burners and relevant container elements of the apparatus of Fig. 1

— Fig. 3 is a perspective partial view of the grill of Fig. 1.

Referring to aforesaid figures, the apparatus according to the invention essentially comprises a supporting structure 1, a heat source 2 and grill 3 capable of holding or supporting the food to be cooked, either the grill 3 is of the revolving or of the fixed type.

The heat source consists of adjacent rows of gas burners 2, fed by a single distributing common tube 5 with branches 4.

Over each row of burners, a channel-shaped element 7 is positioned fixed to supports present in the supporting structure, parallely to the gas feeding tube 4 forming the corresponding row of burners.

The channel-shaped elements 7 have a width higher than or equal to the one of burners 2, in a way that the latter remain protected from the melted fat drops dripping from the food.

The channel-shaped elements 7 have also a flame trap function in order to allow a more uniform heat distribution. Said channel-shaped elements 7 are filled with incoherent material 6 capable of absorbing the melted fat and of resisting to heat, such as for example ash, sand and the like. In this way, the fat or the other substances are absorbed by the ash itself which, being at a lower temperature than the one of inflammability, prevents them from burning. Furthermore, cleaning of the elements 7 is extremely easy in that it is limited to the removal of the elements themselves from their relevant supports and to the substitution of the incoherent material contained in the channels with other fresh material.

The apparatus according to the invention can be provided with a fixed grill or a revolving grill. In the latter case, the grill consists of two equal parts A and B, superimposed and designed to hold the food to be cooked in between. Each part of the grill is formed by channel elements 8, having both ends 12 closed, positioned parallel and spaced from one another.

Said channel elements 8 extend parallely to the rotation axis R of the grill 3 and are kept in position by cross arms 9 placed at right angle in respect to the channel elements and externally fixed to the same in correspondence to their bottoms.

Therefore the grate thus formed consistutes the grill and the channel elements of the two parts of the grill have their bottoms oriented in opposite directions. Advantageously, in order to better hold the food and to decrease the contact surface thus allowing easier removal of the cooked food, the edges of the channel elements 8 are provided with teeth, as shown by reference 11.

When the two parts of the grill A and B are fixed to one another with the food placed between them, the open part 10 of the channel elements 8 is in contact with the food itself and the melted fat dripping from same in the areas in contact with the channel elements 8 is held within them.

Of course, when the grill is rotated by 180°, the lower part A of the grill, the channel elements 8 of which hold the melted fat, moves towards upside with its channel elements in overturned position, so that the fat drips again for gravity reasons on to the products, thus contributing to make them cook well.

This cycle repeats itself until the products are completely cooked. The closed ends 12 of the channel elements 8 prevent the melted fat from flowing out from said ends.

What reported hereinabove easily shows that the illustrated apparatus presents undeniable advantages even from the viewpoint of cleaning.

As a matter of fact the quantity of melted fat dripping from the products under cooking is substantially reduced by the channel elements forming the grill 3, while the channel-shaped elements 7 placed on top of the burners 2 eliminate the inconvenience of stoppage of the burners themselves and of the formation of burned fat pieces, which not only produce smokes and undesirable flames, but also encrust the surface on which they are.

The fat pieces which may drop from the products under cooking in between the containers 7, reach a dripping-pan (not illustrated) placed under the burners 2, preferably at such a distance as to assure a temperature below the inflammability point of said fat pieces.

It should also be noted that, in the case of a revolving grill, the latter is usually kept at an optimal distance (of the order of 15—16 cm) from the heating elements 7, being periodically lifted to allow its 180° rotation.

**Claims**

1. An apparatus for extemporary grilling of food, of the type comprising a grill (3) supporting or holding the food and a heat source consisting of one or more flames and screens, placed between the same and the grill for indirect flame cooking, said screens being formed by container elements open towards the grill and filled with incoherent material (6) capable of absorbing the fat or other substances which drop from the food and of maintaining the same at a temperature lower that the one of inflammability, characterized in that said flames are obtained from gas burners (2) arranged in rows, and said screen elements consist of channels (7) having U-shaped sections turned upwards, each extending for the whole length of the relevant row of burners (2) and having a width equal or higher than the one of said row.

2. An apparatus according to claim 1, wherein said rows of gas burners (2) are parallel rows and said U-shaped channels (7) are mounted over their relevant row in a removable way.

3. An apparatus according to claim 1, wherein the incoherent material (6) is ash and/or sand.

4. An apparatus according to claims 1 or 2, wherein the containers (7) also contain one or more aromatizing vegetable substances.

5. An apparatus according to claim 1, characterized in that it comprises a dripping-pan placed under the heat source, in a position where the temperature caused by the source is not enough to burn the substances dropping from the food.

6. An apparatus according to one of the preceding claims, of the type with revolving grill, characterized in that the grill (3) comprises a series of channel components (8) parallel to the rotation axis (R) of the grill itself, placed in a way as to have their concave part (10) turned towards the food fixed in the grill and adapted to receive the melted fat flowing from the products themselves and making it fall again on the products during the grill rotation.

7. An apparatus according to claim 6, wherein said channel elements (8) have teeth (11) on their edges to hold the products.

8. An apparatus according to claim 6 or 7, wherein the grill is placed at a lower distance from the containers of incoherent material that its half-widths and wherein the grill is periodically lifted and rotated by 180°.

9. An apparatus according to claim 8, wherein the grill is kept at a distance of 15—16 cm from the containers of incoherent material.

**Patentansprüche**

1. Vorrichtung, um Nahrungsmittel aus dem Stegreif zu grillen, von der Bauart, die einen Grill (3), der die Nahrungsmittel trägt oder hält, und eine Wärmequelle aufweist, die aus einer oder mehreren Flammen und Abschirmungen besteht, die zwischen denselben und dem Grill zum Kochen mit indirekter Flamme angeordnet sind, wobei die Abschirmungen von Behälterelementen gebildet sind, die zum Grill hin offen und mit unzusammenhängendem Material (6) gefüllt sind, das in der Lage ist, Fett oder andere Substanzen zu absorbieren, die aus den Nahrungsmitteln tropfen, und diese auf einer niedrigeren Temperatur als der der Entflammbarkeit zu halten, dadurch gekennzeichnet, daß die Flammen von Gasbrennern (2) erhalten werden, die in Reihen angeordnet sind, und daß die Abschirmungselemente aus Kanälen (7) bestehen, die nach oben gerichtete U-förmige Querschnitte haben und die sich jeweils über die gesamte Länge der betreffenden Reihe von Brennern (2) erstrecken und eine Breite haben, die gleich der oder größer als die der Reihe ist.

2. Vorrichtung nach Anspruch 1, wobei die Reihen von Gasbrennern (2) parallele Reihen sind und die U-förmigen Kanäle (7) über der betreffenden Reihe in lösbarer Weise montiert sind.

3. Vorrichtung nach Anspruch 1, wobei das unzusammenhängende Material (6) Asche und/ oder Sand ist.

4. Vorrichtung nach Anspruch 1 oder 2, wobei die Behälter (7) auch eine oder mehrere würzende Gemüsesubstanzen enthalten.

5. Vorrichtung nach Anspruch 1, dadurch gekennzeichnet, daß sie eine Tropfschale aufweist, die unter der Wärmequelle in einer Position angeordnet ist, wo die von der Quelle hervorgerufene Temperatur nicht hoch genug ist, um die aus den Nahrungsmitteln heraustropfenden Substanzen zu verbrennen.

6. Vorrichtung nach einem der vorhergehenden Ansprüche von der Bauart mit sich drehendem Grill, dadurch gekennzeichnet, daß der Grill (3) eine Reihe von Kanalbauteilen (8) parallel zu der Drehachse (R) des Grills selbst aufweist, die in der Weise angeordnet sind, daß ihre konkaven Teile (10) den auf dem Grill befestigten Nahrungsmitteln zugewandt sind und daß sie so ausgelegt sind, daß sie das aus den Produkten selbst fließende, geschmolzene Fett auffangen und dafür sorgen, daß es während der Grilldrehung wieder auf die Produkte fällt.

7. Vorrichtung nach Anspruch 6, wobei die Kanalelemente (8) an ihren Kanten Zähne (11) aufweisen, um die Produkte festzuhalten.

8. Vorrichtung nach Anspruch 6 oder 7, wobei der Grill in einem geringeren Abstand von den Behältern des unzusammenhängenden Materials als der halben Breite angeordnet ist und wobei der Grill periodisch angehoben und um 180° gedreht wird.

9. Vorrichtung nach Anspruch 8, wobei der Grill in einem Abstand von 15 bis 16 cm von den Behältern des unzusammenhängenden Materials gehalten ist.

**Revendications**

1. Un appareil pour le grillage extemporané d'aliments, du type comprenant une grille (3) supportant ou maintenant l'aliment et une source de chaleur consistant en une ou plusiers flammes et des écrans, disposés entre celles-ci et la grille pour un chauffage par flamme indirect, lesdits écrans étant formés par des éléments formant réceptacles ouverts du côté de la grille et remplis de matériau non cohérent (6) pouvant absorber la graisse ou autres substances qui gouttent de l'aliment et la maintenir à une température inférieure à la température d'inflammabilité, caractérisé en ce que lesdites flammes sont obtenues à partir de brûleurs à gaz (2) disposés en rangées et que les éléments d'écrans consistent en des gouttières (7) à section en U tournés vers le haut, chacune s'étendant sur toute la longueur de la rangée de brûleurs (2) correspondante et ayant une largeur égale ou supérieure à celle de ladite rangée.

2. Un appareil selon la revendication 1, dans lequel lesdites rangées de brûleurs à gaz (2) sont des rangées paralleèles et lesdites gouttières à section en U (7) sont montées amovibles au-dessus de leur rangée correspondante.

3. Un appareil selon la revendication 1, dans lequel le matériau non cohérent est cendre et/ou sable.

4. Un appareil selon les revendications 1 ou 2, dans lequel les réceptacles (7) contiennent également une ou plusieurs substances végétables aromatisantes.

5. Un appareil selon la revendication 1, caractérisé en ce qu'il comprend une léchefrite disposée sous la source de chaleur, dans une position où la température causée par la source n'est pas suffisante pour brûler les substances gouttant de l'aliment.

6. Un appareil selon l'une quelconque des revendications précédentes, du type ayant une grille pivotante, caractérisé en ce que la grille (3) comprend une série d'éléments de gouttières (8) parallèles à l'axe de rotation (R) de la grille elle-même, disposées de manière à ce que leur partie concave (10) soit tournée vers l'aliment fixé dans la grille et adaptés pour recevoir la graisse fondue coulant des produits eux-mêmes et la faisant tomber à nouveau sur les produits pendant la rotation de la grille.

7. Un appareil selon la revendication 6, dans lequel lesdits éléments de gouttières (8) ont des dents (11) sur leurs chants pour maintenir les produits.

8. Un appareil selon la revendication 6 ou 7, dans lequel la grille est placée à une distance des réceptacles de matériau non cohérent plus faible que leur demi-largeur et dans lequel la grille est périodiquement soulevée et tournée de 180.

9. Un appareil selon la revendication 8, dans lequel la grille est maintenue à une distance de 15—16 cm des réceptacles de matériau non cohérent.

0 142 711

## Fig. 1

0 142 711

Fig. 2

Fig 3